# EUROPÄISCHE PATENTSCHRIFT

(11) **EP 0 503 146 B1**
(45) Veröffentlichungstag und Bekanntmachung des Hinweises auf die Patenterteilung: **22.06.1994**
(21) Anmeldenummer: 91120880.9
(22) Anmeldetag: 05.12.1991
(51) Int. Cl.: F24H 8/00, F24H 1/28, F28D 9/00, F28F 3/08

(54) **Heizgaszugtasche, insbesondere für Brennwertheizkessel**
Flat heating gas draft tube especially for condensing boiler
Tuyau plat de tirage pour gaz de chauffage pour chaudière à condensation

(30) Priorität: 13.03.1991 DE 4107948; 31.05.1991 DE 4117778
(43) Veröffentlichungstag der Anmeldung: 16.09.1992
(73) Patentinhaber: Viessmann, Hans, Dr., 35088 Battenberg/Eder (DE)
(72) Erfinder: Viessmann, Hans, Dr., 35088 Battenberg/Eder (DE)
(74) Vertreter: Wolf, Günter, Dipl.-Ing.

(56) Entgegenhaltungen:
- EP-A- 0 016 915
- WO-A-88/01722
- DE-U- 9 106 654

## Beschreibung

Die Erfindung betrifft eine Heizgaszugtasche, insbesondere für Brennwertheizkessel gemäß dem Oberbegriff des Hauptanspruches.

Als Wärmetauscher dienende Heizgaszugtaschen der genannten Art sind bekannt, und zwar aus folgenden Druckschriften: EP 0 016 915, DE-A -28 56 678, NL-A- 68 08 071, DE-A- 826 445. Der Einbau solcher Heizgaszugtaschen in Heizkessel kann bei im wesentlichen horizontaler Durchströmung im Sinne der EP 00 16 915 oder bei im wesentlichen vertikaler Durchströmung im Sinne der EP 0 230 594 erfolgen, wobei im vorliegenden Fall solche Heizkessel in Betracht gezogen sind, deren Taschen im wesentlichen horizontal durchströmt werden. Gemeinsam ist all den bekannten Taschen, die in der Regel als Taschenblock zum Einbau kommen, daß die Wellenprägungen in den sich gegenübersehenden Taschenflächen mehr oder weniger stark in bezug auf die Durchströmrichtung geneigt sind und zwar jeweils entgegengesetzt. Einerseits ist dies mit einem beträchtlichen Strömungswiderstand verbunden, zumal in der Regel die beteiligten Wandbleche so dicht einander zugeordnet sind, daß sich ihre sich kreuzenden Wellungen an den Kreuzungsstellen zumindest punktuell berühren, und andererseits führt dies, soweit derartige Taschen in sogenannten Brennwertkesseln zum Einsatz kommen, dazu, daß sich niederschlagendes Kondensat in der Tasche selbst, und zwar insbesondere im Bodenbereich sammeln und aufkonzentrieren kann, und ferner läuft das Kondensat an horizontal angeordneten Taschen sowohl zu- als auch abströmseitig aus. Letzterem kann zwar durch eine Taschenneigung bis zu einem gewissen Grade begegnet werden, da aber zumindest immer eine Taschenfläche Wellenprägungen aufweist, die einer solchen Taschenneigung entgegengesetzt gerichtet ist, fließt immer ein Teil des Kondensats entgegen der Gasdurchströmrichtung, was natürlich einen schnellen Kondensatabfluß behindert.

Der Erfindung liegt somit die Aufgabe zugrunde, Heizgaszugtaschen der eingangs genannten Art dahingehend zu verbessern, daß die genannten Nachteile vermieden werden können, d.h., der Strömungswiderstand solcher im wesentlichen horizontal durchströmten Taschen soll bei noch ausreichend gegebener Gasverwirbelung reduziert und dabei dafür gesorgt werden, daß das Kondensat trotz sich kreuzender Wellenprägungen in Durchströmrichtung der Heizgase abfließt und der Wärmetausch zum wesentlichen Teil nach dem Gegenstromprinzip erfolgt.

Diese Aufgabe ist nach der Erfindung durch eine Heizgaszugtasche mit den Merkmalen des Hauptanspruches gelöst. Vorteilhafte Weiterbildungen ergeben sich nach den Unteransprüchen.

Wesentlich für die erfindungsgemäße Ausbildung ist zum einen, daß die Wellenprägungen in beiden Taschenflächen im wesentlichen senkrecht zur horizontalen Durchström-richtung orientiert sind, wobei allerdings die Wellenprägungen in dem einen Blechzuschnitt bei grundsätzlich gleicher Neigungsorientierung etwas stärker geneigt sind als in dem anderen Blechzuschnitt. Zum anderen ist wesentlich, daß sich die Wellenprägungen nicht über die ganze Höhe der Tasche, sondern zwischen einem oberen Zustromkanal und einem unteren Abströmkanal erstrecken, welche Kanäle, im Längsschnitt gesehen, Keilform haben. Der wesentliche Teil der aus der vor solchen Taschen angeordneten Brennkammer anströmenden Heizgase tritt also oben in die Tasche ein, strömt dann durch die Wellenprägungen bei ausreichender Durchwirbelung nach unten in den Abströmkanal und von da in die anschließende Abzugssammelkammer. Die Maßgabe "im wesentlichen senkrecht" ist so zu verstehen, daß die Wellenprägungen im einen Zuschnitt gegen die Vertikale um 0-5° zum unteren Kanal hin in Abströmrichtung geneigt sind und die Wellenprägungen des anderen Zuschnittes mit gleicher Neigungsorientierung aber mit einer Neigungsdifferenz in der Größenordnung von maximal 15°.

Eine vorteilhafte Weiterbildung der erfindungsgemäßen Heizgaszugtasche besteht dabei darin, daß die beiden Zuschnitte zu einem einstückigen Zuschnitt zusammengefaßt ausgebildet sind, wobei der mittige, gebogene, wellenfreie Streifen die untere Begrenzung der Tasche bildet, die oben längs abgebogener Ränder mit einer Längsschweißnaht geschlossen ist. Dies hat nicht nur fertigungstechnische Vorteile, da man hierbei nur einen Blechzuschnitt mit einem entsprechenden Prägewerkzeug zu prägen und danach zur Tasche zusammenzufalten hat, sondern dies hat auch den Vorteil, daß im insoweit kritischen Bodenbereich der Tasche keine Schweißnaht verlegt werden muß, sondern nur oben, wo aber sowieso keine Belastungen durch Kondensat auftreten können.

Da solche Heizgaszugtaschen sowohl hinsichtlich der Temperatur als auch des Druckes von der Wasserseite her beträchtlichen Belastungen ausgesetzt sind und man andererseits bemüht ist, für die Ausbildung der Taschen Blech mit möglichst geringer Stärke verwenden zu können, bestehen vorteilhafte Weiterbildungen einerseits darin, daß die abgebogenen Ränder mit zusätzlichen, in den Zugquerschnitt abgewinkelten und aneinander anliegenden Rändern versehen sind und die Längsschweißnaht im von den Rändern gebildeten Zwickel angeordnet ist, und daß andererseits zu- und abströmseitig an den Zuschnitten längs deren vertikalen Rändern zweifach abgekröpfte Anschlußfahnen für jeweils benachbarte, per Längsschweißnaht angeschlossene Taschen angeordnet sind. Diese abgebogenen und aneinander anliegenden Ränder tragen ganz wesentlich zur Stabilität jeder Tasche, aber auch eines ganzen Taschenblockes bei und erleichtern das Verlegen der Längsschweißnähte, wobei die sich oben an der Tasche horizontal erstreckende Längsschweißnaht auf der Wasserseite befindet, also auf keinen Fall mit Heizgasen belastet wird. Die sich vertikal erstreckenden Längsschweißnähte, mit denen mehrere Taschen nebeneinander zu einem Block verbunden werden, könnten dabei im übrigen ebenfalls auf der Wasserseite angelegt werden, um auch diese Schweißnähte einer Heizgasbelastung zu entziehen.

Zudem wurde gefunden, daß unter Beachtung und möglicher Beibehaltung des geringen Strömungswiderstandes eine vorteilhafte Weiterbildung zwecks Wärmeübergangsflächenvergrößerung auch im Bereich der keilförmigen Kanäle möglich ist, nämlich in der Weise, daß in den Blechzuschnitten und zwar im Bereich der keilförmigen Kanäle ebenfalls und im wesentlichen mit der gleichen Neigungsorientierung Wellenprägungen angeordnet, diese aber zur Wasserseite hin ausgeprägt sind.

Ein geringfügiger Winkelversatz in der Neigung den Wellenprägungen im Bereich zwischen den Zu- und Abströmkanälen ist hierbei nicht erforderlich, da die Wellenprägungen in den Wänden der keilförmigen Kanäle nicht in die gasführenden Innenräume der Taschen einragen. "Im westentlichen mit gleicher Neigungsorientierung" ist also nur so zu verstehen, daß die Richtungstendenz nur in etwa der der Wellenprägungen im Bereich zwischen den Zu- und Abströmkanälen entspricht. Dabei wäre es auch durchaus möglich, die Wellenprägungen in den keilförmigen Kanälen in bezug auf die an- bzw. abströmenden Gase flacher anzustellen.

Die erfindungsgemäße Heizgaszugtasche wird nachfolgend anhand der zeichnerischen Darstellung von Ausführungsbeispielen näher erläutert.

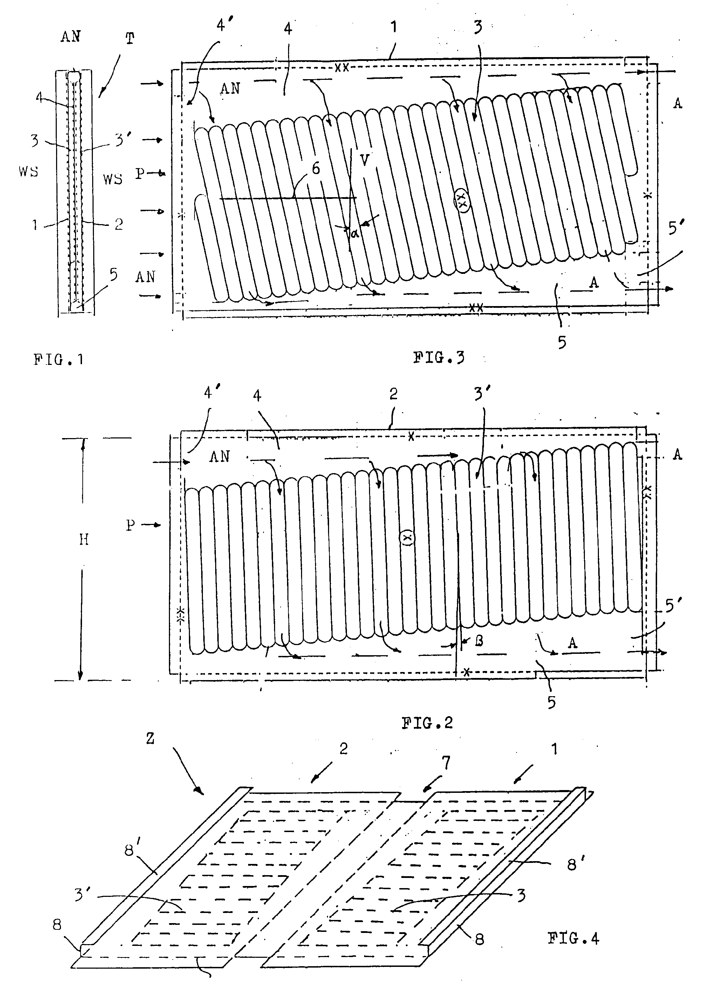

Es zeigt schematisch
- Fig. 1: eine Ansicht der Heizgaszugtasche in Pfeilrichtung P;
- Fig. 2,3: Seitenansichten zweier eine Tasche bildende Blechzuschnitte;
- Fig. 3A: einen Horizontalschnitt durch eine Tasche;
- Fig. 4: perspektivisch die Abwicklung eines eine Tassche bildenden Blechzuschnittes;
- Fig. 5: perspektivisch zwei nebeneinander angeordnete und miteinanderder verbundene Heizgaszugtaschen;
- Fig. 6: einen Teilschnitt durch den oberen Bereich einer Heizgaszugtasche;
- Fig. 7: ebenfalls einen Teilschnitt durch die einander zugekehrten Wände zweier benachbarter Taschen längs der Linie VII-VII in Fig. 5;
- Fig. 8: in Pfeilrichtung P die Ansicht eines aus mehreren Taschen gebildeten Taschenblockes;
- Fig. 9: die Seitenansicht einer Tasche in besonderer Ausführungsform und
- Fig. 10: stark schematisiert die unterschiedlichen Prägungsorientierungen der Wellen an einer Tasche gemäß Fig. 9.

Die Heizgaszugtasche besteht, wie ersichtlich, aus zwei sich in parallelen Ebenen erstreckenden, die zur Wasserseite WS geschlossene Tasche T bildenden, flächigen Blechzuschnitte 1, 2, die mit zueinander parallelen und in den Zugquerschnitt Q einragenden Wellenprägungen 3, 3′ versehen sind, wobei die Wellenprägungen 3 des einen Zuschnittes 1 geneigt zu den Wellenprägungen 3′ des anderen Zuschnittes 2 verlaufen.

Für eine derartige Heizgaszugtasche ist nun wesentlich, daß die Tasche T mit einem oberen, sich keilförmig zur Abströmseite A hin verengenden Zuströmkanal 4 und mit einem unteren, sich keilförmig zur Abströmseite A hin erweiternden Abströmkanal 5 versehen ist und zwischen den beiden Kanälen 4, 5 in den die Tasche T bildenden Blechzuschnitten 1, 2 die Wellenprägungen 3, 3′ im wesentlichenen senkrecht zur Taschenlängsachse 6, aber zueinander mit unterschiedlicher Neigung orientiert, angeordnet sind. Bei grundsätzlich im wesentlichen vertikaler Orientierung der Wellenprägungen sind die Prägungen 3′ in bezug auf die Vertikale V nur um einen Winkel β von 1-2° geneigt im Zuschnitt 2 eingeprägt. Der andere Winkel α, unter dem sich die Wellenprägungen 3 zur Vertikalen V und abfallend zur Abströmseite A erstrecken, liegt demgegenüber in der Größenordnung von 10-12°. Dadurch ergibt sich eine Kreuzungszuordnung der Wellenprägungen 3, 3′ zueinander, und ferner ergibt sich zuströmseitig im oberen Drittel der Taschenhöhe H ein völlig offener Zuströmquerschnitt 4′ und unten auf der Abströmseite ein entsprechend großer Abströmquerschnitt 5′.

Grundsätzlich ist es möglich, die Blechzuschnitte 1, 2 als Einzelzuschnitte auszubilden, diese an ihren entsprechenden gegenüberliegenden Längsrändern abzukröpfen, gegeneinanderzulegen und längs ihrer abgekröpften und aneinandergestoßenen Längsränder zu verschweißen. Vorteilhaft wird aber, wie in Fig. 4 dargestellt, die Heizgaszugtasche derart gestaltet, daß die beiden Zuschnitte 1, 2 zu einem einstückigen Zuschnitt Z zusammengefaßt ausgebildet sind, wobei der mittige, zu biegende und wellenfreie Streifen 7 die untere Begrenzung der Tasche T bildet, die oben längs abgebogener Ränder 8 mit einer Längsschweißnaht 9 geschlossen ist. Diesbezüglich wird auch auf Fig. 5 verwiesen, die perspektivisch zwei benachbart angeordnete und miteinander verbundene Heizgaszugtaschen T verdeutlicht. Dadurch wird eine Schweißnaht im Bodenbereich der Tasche T vermieden, der, wie aus Fig. 5 ersichtlich, aus dem Streifen 7 gebildet ist. Die oben abgebogenen Ränder 8 sind dabei mit zusätzlich in den Zugquerschnitt Q abgewinkelten und aneinander anliegenden Rändern 8′ versehen, wobei die Längsschweißnaht 9 im von den Rändern 8′ gebildeten Zwickel angeordnet ist.

Für die in Fig. 5 dargestellte benachbarte Zuordnung und Verbindung von Taschen T sind zu- und abströmseitig an den Zuschnitten 1, 2 längs deren vertikalen Rändern 10 zweifach abgekröpfte Anschlußfahnen 11 (siehe auch Fig. 7) für jeweils benachbarte, per Längsschweißnaht 12 angeschlossene Taschen T vorgesehen. Wie in Fig. 7 angedeutet, wird die Längsschweißnaht 12 zur Verbindung zweier Taschen nicht im gasseitigen Zwickel, sondern wasserseitig an den Kanten der abgekröpften Ränder 11 angelegt.

Die in Fig. 7 gezeigte Tiefe T′ der Wellenprägungen 3, 3′ kann beim zweiten Zuschnitt 2 größer sein als die der Wellenprägungen 3 des Zuschnitts 1, wobei die unterschiedliche Bemessung sich im Bereich von wenigen Millimetern bewegt.

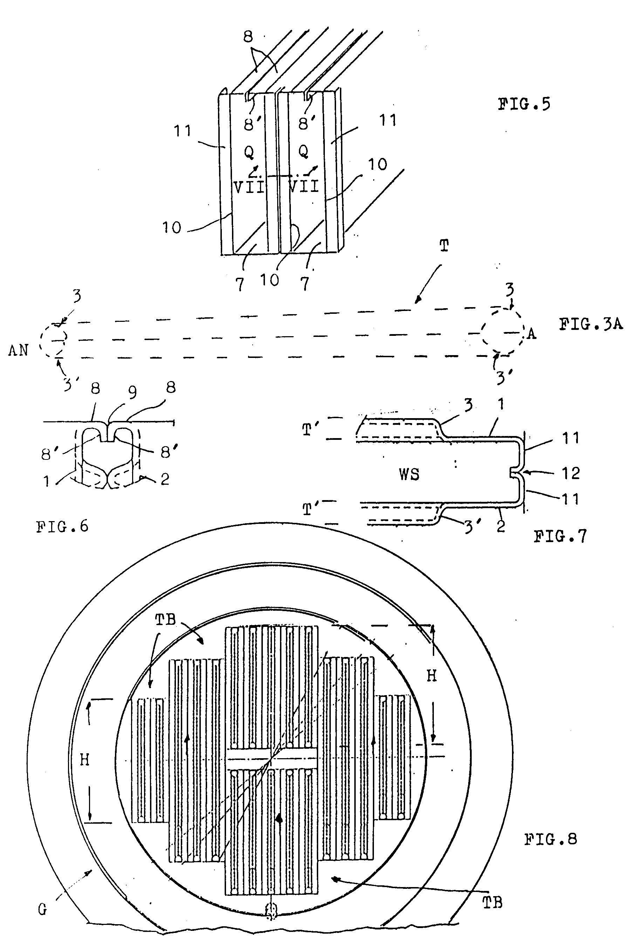

Bei grundsätzlich gleicher Ausbildung jeder Tasche, wie beschrieben, können die Taschen, um zu einer Taschenblockausbildung gemäß Fig. 8 zu kommen, in ihrer Höhe unterschiedlich bemessen und dann in symmetrischer Zuordnung zum Taschenblock TB zusammengefügt werden. Die Zusammenfügung im Sinne der Fig. 5 ist dabei natürlich nicht zwingend, d.h., die Taschen können auch ohne weiteres einzeln in mit entsprechenden Anschlußschlitzöffnungen versehenen Blechen auf der Zu- und Abströmseite eingebunden werden. Aufgrund der speziellen Taschenausbildung fließt sich in den Taschen niederschlagendes Kondensat konsequent in Gasdurchströmrichtung nur nach der Abströmseite A in einen Sammelkasten ab und wird dort durch einen bodenseitig angeordneten Kondensatabfluß abgeführt.

Abgesehen davon, daß auf relativ kleinem Raum eine große Wärmeübergangsfläche erreicht werden kann, ergeben sich für derart ausgebildete Taschen T besonders intensive Wärmeübergangsverhältnisse, da im Wellenprägungsbereich die Gase praktisch im Gegenstrom zum an den Taschenflanken aufsteigenden Kesselwasser strömen. Die Zusammenstellung von Taschenblöcken aus Einzeltaschen T im Sinne der Fig. 5 wurde bei einem zylindrischen Kesselgehäuse G bspw. gemäß Fig. 8 erfolgen. Um zu große, d.h. zu hohe und damit relativ labile Taschen zu vermeiden, werden im mittleren Bereich, wie dargestellt, zwei Taschenblöcke TB übereinander angeordnet, deren Einzeltaschen in ihrer Höhe H der Einzeltaschen der beiden seitlich angeordneten Taschenblöcke TB entsprechen.

Bei einer kastenförmigen Brennkammer und einem ebensolchen Kesselgehäuse stünde bei großer Kammer- und Gehäusegröße natürlich nichts entgegen, zwei Taschenblöcke jeweils aus Taschen T gleicher Höhe übereinander anzuordnen.

Eine besonders vorteilhafte Ausführungsform besteht in einer speziellen Querschnittsbemessung der im wesentlichen vertikal orientierten und von den Wellenprägungen 3, 3′ begrenzten Kanälen gemäß Fig. 3A, d.h. die Querschnitte auf der Anströmseite AN sind kleiner in bezug auf die auf der Abströmseite A und nehmen größer werdend nach dorthin zu. Über die Erstreckungslänge der Kanäle vom Zuströmkanal 4 zum Abströmkanal 5 ist der Querschnitt jedes Kanales natürlich gleichbleibend. Eine derartige Ausbildung läßt sich bei entsprechender Gestaltung der Prägewerkzeuge für die Blechzuschnitte 1, 2 problemlos verwirklichen.

Durch eine solche Ausbildung der Kanäle werden die in den Zuströmkanal 4 einströmenden Heizgase in diesem besser auf die von diesem nach unten zum Abströmkanal 5 abgehenden Kanäle verteilt (der Widerstand ist vorn größer als hinten), die thermische Belastung der Tauschfläche ist vergleichmäßigt, Überheizungen und Dampfblasenbildungen werden verhindert und damit der Wärmeübergang insgesamt verbessert. Diese bessere Verteilung ist im übrigen auch dann von besonderer Bedeutung, wenn mit solchen Taschen ausgerüstete Heizkessel mit Brennern bestückt sind, die mit abgestufter oder modulierender Regelung bedarfsangepaßt betrieben werden können.

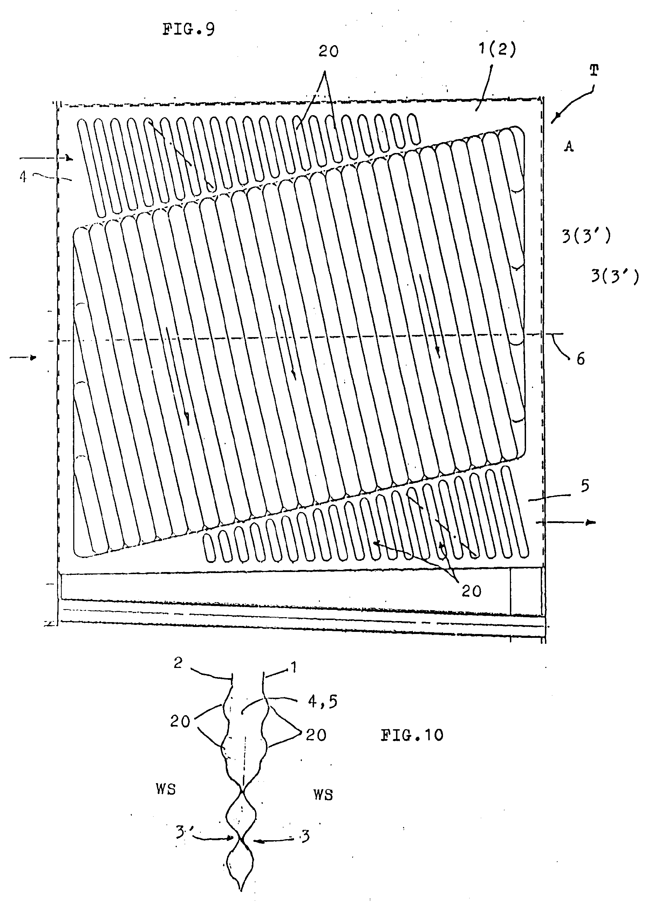

Bei der Ausführungsform nach Fig. 9, 10 ist die Tasche T ebenfalls mit einem oberen, sich keilförmig zur Abströmseite A hin verengenden Zuströmkanal 4 und mit einem unteren, sich keilförmig zur Abströmseite A hin erweiterenden Abströmkanal 5 versehen und zwischen den beiden Kanälen 4, 5 sind in den die Taschen T bildenden Blechzuschnitten die Wellenprägungen 3 im wesentlichen senkrecht zur Taschenlängsachse 6 aber zueinander mit unterschiedlicher Neigung orientiert angeordnet sind. Diese Wellenprägungen 3 sind dabei, wie vorbeschrieben, in den gasführenden Innenraum der Tasche T gerichtet und berühren sich nur punktuell an ihren Kreuzungsstellen. Nach der Weiterbildung und wie dargestellt, sind nun in den die keilförmigen Kanäle 4, 5 begrenzenden Blechzuschnitten 1, 2 ebenfalls mit der bspw. dargestellten Konfiguration Wellenprägungen 20 angeordnet, die jedoch zur Wasserseite hin ausgeprägt sind. Die gegensätzlichen Prägungsorientierungen sind stark schematisiert in Fig. 10 verdeutlicht. Wie strichpunktiert in Fig. 9 angedeutet, können die Wellenprägungen 20 auch flacher zu den an- bzw. abströmenden Heizgasen angestellt sein.

## Patentansprüche

1. Heizgaszugtasche, insbesondere für Brennwertheizkessel, bestehend aus zwei sich in parallelen Ebenen erstreckenden, die zur Wasserseite (WS) geschlossene Tasche (T) bildenden, flächigen Blechzuschnitte (1, 2), die jeweils mit zueinander parallelen Wellenprägungen (3) versehen sind, wobei die Wellenprägungen (3) des einen Zuschnittes (1) geneigt zu den Wellenprägungen (3′) des anderen Zuschnittes (2) verlaufen,
**dadurch gekennzeichnet,**
daß die Tasche (T) mit einem oberen, sich keilförmig zur Abströmseite (A) hin verengenden Zuströmkanal (4) und mit einem unteren, sich keilförmig zur Abströmseite (A) hin erweiternden Abströmkanal (5) versehen ist und zwischen den beiden Kanälen (4, 5) in den die Taschen (T) bildenden Blechzuschnitten (1, 2) die Wellenprägungen (3, 3′) im wesentlichen senkrecht zur Taschenlängsachse (6), aber zueinander mit unterschiedlicher Neigung orientiert, angeordnet sind.

2. Heizgaszugtasche nach Anspruch 1,
**dadurch gekennzeichnet,**
daß die Wellenprägungen (3′) des zweiten Zuschnitts (2) gegen die Vertikale (V) um 0-5°, vorzugsweise 2,5° und die Wellenprägungen (3) des ersten Zuschnitts (1) mit gleicher Neigungsorientierung aber mit einer Neigungsdifferenz zu den Wellenprägungen (3′) des zweiten Zuschnitts (2) von maximal 15°, vorzugsweise 7,5° zum Abströmkanal (5) hin in Abströmrichtung geneigt sind.

3. Heizgaszugtasche nach Anspruch 1 oder 2,
**dadurch gekennzeichnet,**
daß die beiden Zuschnitte (1, 2) zu einem einstückigen Zuschnitt (Z) zusammengefaßt ausgebildet sind, wobei der mittige, gebogene und wellenfreie Streifen (7) die untere Begrenzung der Tasche (T) bildet, die oben längs abgebogener Ränder (8) mit einer Längsschweißnaht (9) geschlossen ist.

4. Heizgaszugtasche nach Anspruch 2 oder 3,
**dadurch gekennzeichnet,**
daß die abgebogenen Ränder (8) mit zusätzlich in den Zugquerschnitt (Q) abgewinkelten und aneinander anliegenden Rändern (8′) versehen sind und die Längsschweißnaht (9) im von den zusätzlichen Rändern (8′) gebildeten Zwickel angeordnet ist.

5. Heizgaszugtasche nach einem der Ansprüche 1 bis 4,
**dadurch gekennzeichnet,**
daß zu- und abströmseitig an den Zuschnitten (1, 2) längs deren vertikalen Ränder (10) zweifach abgekröpfte Anschlußfahnen (11) für jeweils benachbarte, per Längsschweißnaht (12) angeschlossene Taschen (T) angeordnet sind.

6. Heizgaszugtasche, insbesondere nach einem der Ansprüche 1 bis 5,
**dadurch gekennzeichnet,**
daß die Teilung der Wellenprägungen (3, 3′) in Richtung auf die Abströmseite zunimmt, so daß die Querschnitte der von den Wellenprägungen (3, 3′) beider Blechzuschitte (1, 2) begrenzten Kanäle von der Anströmseite (AN) der Tasche zur Abströmseite (A) der Tasche hin jeweils zunehmend größer werden, die Querschnitte jeden Kanales über seine Erstreckungslänge aber gleichbleibend ausgebildet sind.

7. Heizgaszugtasche nach einem der Ansprüche 1 bis 6,
**dadurch gekennzeichnet,**
daß in den Blechzuschnitten (1, 2), und zwar im Bereich der keilförmigen Kanäle (4, 5) ebenfalls und im wesentlichen mit der gleichen Neigungsorientierung Wellenprägungen (20) angeordnet, diese aber zur Wasserseite hin ausgeprägt sind.

## Claims

1. A heating gas flue pocket, in particular, for condensate heating boilers, comprising two planar plate blanks (1,2) extending in parallel planes and forming the pocket (T) closed toward the water side (WS), which blanks are respectively provided with corrugated impressions (3) parallel with respect to one another, with the corrugated impressons (3) of one blank (1) extending at an inclination toward the corrugated impressions (3′) of the other blank (2),
characterized in that the pocket (T) is provided with an upper in-flow channel (4) constricted in wedge-shaped manner toward the off-flow side (A) and with a lower off-flow channel (5) expanded in wedge-shaped manner toward the off-flow side (A), and that provided between the two channels (4,5) in the plate blanks (1,2) forming the pockets (T) are the corrugated impressions (3,3′) substantially vertical to the longitudinal axis (6) of the pocket but oriented at a different inclination with respect to one another.

2. A heating gas flue pocket according to claim 1,
characterized in that the corrugated impressions (3′) of the second blank (2) are inclined against the vertical (V) by 0-5°, preferably 2.5°, and the corrugated impressions (3) of the first blank (1) are inclined with the same orientation of inclination but with an inclination difference over the corrugated impressions (3′) of the second blank (2) of 15° at the most, preferably 7.5° toward the off-flow channel (5) in the off-flow direction.

3. A heating gas flue pocket according to claims 1 or 2,
characterized in that the two blanks (1,2) are combined to form an integral blank (Z), with the central, bent and non-corrugated strip (7) forming the bottom delimitation of the pocket (T) closed at the top along bent rims (8) by a longitudinal welding seam (9).

4. A heating gas flue pocket according to claims 2 or 3,
characterized in that the bent rims (8) are provided with rims (8′9) additionally bent in the flue cross-section (Q) and arranged in abutting relationship, and that the longitudinal welding seam (9) is located in the wedge formed by the additional rims (8′).

5. A heating gas flue pocket according to any one of claims 1 to 4,
characterized in that located on the in-flow and off-flow sides on the blanks 1,2) along the vertical rims (10) thereof are dual-cranked tags (11) for respectively adjacent pockets (T) connected by the longitudinal welding seam (12).

6. A heating gas flue pocket, in particular, according to any one of claims 1 to 5,
characterized in that the division of the corrugated impressions (3,3′) increases toward the off-flow side so that the cross-sections of the channels confined by the corrugated impressions (3,3′) of the two blanks (1,2) respectively become incrementally larger from the in-flow side (AN) of the pocket toward the off-flow side (A) of the pocket, while the cross-sections of each channel throughout the length of extension thereof are uniformly formed.

7. A heating gas flue pocket according to any one of claims 1 to 6,
characterized in that corrugated impressions (20) are also provided in the plate blanks (1,2), namely in the area of the wedge-shaped channels (4,5) substantially with the same orientation of inclination, with the said corrugated impressions (20) being, however, formed toward the water side.

## Revendications

1. Poche de tirage de gaz de chauffage, en particulier pour chaudière de chauffage à condensation, constituée par deux découpes de tôle minces (1, 2) qui s'étendent dans des plans parallèles, qui forment la poche (T) fermée côté eau (WS), qui sont pourvues chacune d'estampages d'ondulations (3) parallèles les uns aux autres, les estampages d'ondulations (3) de l'une des découpes (1) étant inclinés par rapport aux estampages d'ondulations (3′) de l'autre découpe (2),
**caractérisée en ce**
que la poche (T) est pourvue d'un canal supérieur d'afflux (4) qui se resserre en forme de clavette vers le côté écoulement (A) et d'un canal inférieur d'écoulement (5) qui s'élargit en forme de clavette vers le côté écoulement (A) et que les estampages d'ondulations (3, 3′) sont placés entre les deux canaux (4, 5) dans les découpes de tôle (1, 2) qui forment les poches (T) en étant substantiellement perpendiculaires à l'axe longitudinal des poches (6) mais en étant orientés les uns par rapport aux autres avec une inclinaison différente.

2. Poche de tirage de gaz de chauffage selon la revendication 1,
**caractérisée en ce**
que les estampages d'ondulations (3′) de la seconde découpe (2) sont inclinés par rapport à la verticale (V) de 0 à 5°, de préférence de 2,5°, et les estampages d'ondulations (3) de la première découpe (1) sont inclinés avec la même orientation d'inclinaison mais avec une différence d'inclinaison par rapport aux estampages d'ondulations (3′) de la seconde découpe (2) de 15° maximum, de préférence de 7,5°, vers le canal d'écoulement (5) dans le sens de l'écoulement.

3. Poche de tirage de gaz de chauffage selon la revendication 1 ou 2,
**caractérisée en ce**
que les deux découpes (1, 2) sont configurées en étant assemblées en une découpe en une pièce (Z), la bande centrale (7) qui est recourbée et sans ondulations formant la délimitation inférieure de la poche (T) qui est fermée en haut le long de bords recourbés (8) par une soudure longitudinale (9).

4. Poche de tirage de gaz de chauffage selon la revendication 2 ou 3,
**caractérisée en ce**
que les bords recourbés (8) sont pourvus de bords (8′) contigus coudés en plus dans la section de tirage (Q) et que la soudure longitudinale (9) est placée dans le gousset formé par les bords supplémentaires (8′).

5. Poche de tirage de gaz de chauffage selon l'une des revendications 1 à 4,
**caractérisée en ce**
que des barrettes (11) coudées deux fois sont placées côté afflux et côté écoulement sur les découpes (1, 2) le long de leurs bords verticaux (10) pour des poches (T) respectivement voisines, raccordées par la soudure longitudinale (12).

6. Poche de tirage de gaz de chauffage, en particulier selon l'une des revendications 1 à 5,
**caractérisée en ce**
que la division des estampages d'ondulations (3, 3′) augmente en direction du côté écoulement si bien que les sections des canaux délimités par les estampages d'ondulations (3, 3′) des deux découpes de tôle (1, 2) deviennent respectivement plus grandes du côté afflux (AN) de la poche au côté écoulement (A) de la poche mais que les sections de chaque canal sont configurées en étant constantes sur la longueur de son extension.

7. Poche de tirage de gaz de chauffage selon l'une des revendications 1 à 6,
**caractérisée en ce**
que des estampages d'ondulations (20) sont placés dans les découpes de tôle (1, 2), et ce dans la zone des canaux en forme de clavette (4, 5) également et substantiellement avec la même orientation d'inclinaison mais que ceux-ci sont estampés vers le côté eau.
